# EUROPEAN PATENT APPLICATION

(11) **EP 4 762 909 A1**
(43) Date of publication of application: **24.06.2026**
(21) Application number: 25217154.1
(22) Date of filing: 20.11.2025
(51) Int. Cl.: A01D 34/78, A01D 69/02

(54) **MOWER AND CONTROL METHOD THEREFOR**

(30) Priority: 18.12.2024 CN 202411868752
(71) Applicant: Nanjing Chervon Industry Co., Ltd., Nanjing, Jiangsu 211106 (CN)
(72) Inventor: XU, Zibo, Nanjing, Jiangsu 211106 (CN); WANG, Lei, Nanjing, Jiangsu 211106 (CN)
(74) Representative: Sun, Yiming

(57) **Abstract**

A mower includes: a battery compartment 14 for mounting at least one battery pack 141; a cutting assembly 13 including a cutting motor 132; a traveling assembly 12 including a traveling motor 122; a battery management unit 17 at least used for monitoring the discharge capacity of the at least one battery pack 141; and a control device 18 electrically connected to the cutting motor 132, the traveling motor 122, and the battery management unit 17. The battery management unit 17 is configured to determine the current discharge capacity parameters of the at least one battery pack 141 in at least two manners and output the minimum parameter among the determined current discharge capacity parameters of the battery pack 141. The control device 18 is configured to acquire the current discharge capacity parameter of the at least one battery pack 141 outputted by the battery management unit 17 and according to the outputted current discharge capacity parameter of the at least one battery pack 141, determine control information adapted to the cutting motor 132 and the traveling motor 122.

## Description

### TECHNICAL FIELD

The present application relates to the technical field of tools and devices and, in particular, to a mower and a control method therefor.

### BACKGROUND

Currently, the battery management unit of a riding mower requires at least five battery packs to be inserted to enable all the electric motor modules in the mower. When the battery level of the battery pack is lower, the mower enters the LIMP HOME mode to limit the power of a cutting motor and a traveling motor. In addition, at least two battery packs need to be inserted to implement the traveling function of the mower, and the user does not always need a mowing component to be in operation, resulting in a poor user experience of the mower. Moreover, the discharge capacity of the battery pack is not only related to the number of battery packs connected in parallel, and parameters such as the temperature and current voltage of the battery pack also affect the discharge capacity of the battery pack, posing a potential risk to the service life of the battery pack.

This part provides background information related to the present application, and the background information is not necessarily the existing art.

### SUMMARY

An object of the present application is to solve or at least alleviate part or all of the preceding problems. Therefore, an object of the present application is to provide a mower.

To achieve the preceding object, the present application adopts the technical solutions below.

A mower includes a battery compartment, a cutting assembly, a traveling assembly, a battery management unit, and a control device. The battery compartment is used for mounting at least one battery pack. The cutting assembly includes a cutting motor. The traveling assembly includes a traveling motor. The battery management unit is at least used for monitoring the discharge capacity of the battery pack. The control device is electrically connected to the cutting motor, the traveling motor, and the battery management unit. The battery management unit is configured to determine the current discharge capacity parameters of the battery pack in at least two manners and output the minimum parameter among the determined current discharge capacity parameters of the battery pack. The control device is configured to acquire the current discharge capacity parameter of the battery pack outputted by the battery management unit and according to the outputted current discharge capacity parameter of the battery pack, determine control information adapted to the cutting motor and the traveling motor.

In some examples, the battery management unit is configured to acquire the temperature of the battery pack and the cell voltage of the battery pack and estimate the current first discharge capacity parameter of the battery pack according to the temperature and the cell voltage.

In some examples, the battery management unit is configured to estimate the cell internal resistance of the battery pack according to the temperature and the cell voltage and determine the current first discharge capacity parameter of the battery pack according to the cell internal resistance.

In some examples, the battery management unit is configured to acquire the temperature of the battery pack and find the corresponding current second discharge capacity parameter of the battery pack according to the temperature.

In some examples, the battery management unit is configured to find the current third discharge capacity parameter of the battery pack according to the cell type of the battery pack.

In some examples, the control device is configured to prohibit the operation of the traveling motor and the cutting motor when the discharge capacity parameter outputted by the battery management unit is less than the first parameter threshold.

In some examples, the control device is configured to: when the discharge capacity parameter outputted by the battery management unit is greater than or equal to the first parameter threshold and less than the third parameter threshold, control the operation state of the traveling motor according to the operation instruction inputted by the user and prohibit the operation of the cutting motor.

In some examples, the control device is configured to: when the discharge capacity parameter outputted by the battery management unit is greater than or equal to the third parameter threshold and less than the second parameter threshold, reduce the rotational speed of the cutting motor while controlling the operation states of the traveling motor and the cutting motor based on the operation instruction inputted by the user.

In some examples, the control device is configured to: when the discharge capacity parameter outputted by the battery management unit is greater than or equal to the second parameter threshold, control the operation state of the traveling motor or the cutting motor based on the operation instruction inputted by the user.

A mower includes a battery compartment, a cutting assembly, a traveling assembly, a battery management unit, and a control device. The battery compartment is used for mounting at least one battery pack. The cutting assembly includes a cutting motor. The traveling assembly includes a traveling motor. The battery management unit is at least used for monitoring the discharge capacity of the battery pack. The control device is electrically connected to the cutting motor, the traveling motor, and the battery management unit. The control device is configured to acquire the current discharge capacity parameter of the battery pack outputted by the battery management unit and when the discharge capacity parameter is greater than or equal to the first parameter threshold and less than the second parameter threshold, adjust at least the rotational speed of the cutting motor according to a parameter range of the discharge capacity parameter.

In some examples, the battery management unit is configured to determine the current discharge capacity parameters of the battery pack in at least two manners and output the minimum parameter among the determined current discharge capacity parameters of the battery pack.

In some examples, the battery management unit is configured to acquire the temperature of the battery pack and the cell voltage of the battery pack and estimate the current first discharge capacity parameter of the battery pack according to the temperature and the cell voltage.

In some examples, the battery management unit is configured to estimate the cell internal resistance of the battery pack according to the temperature and the cell voltage and determine the current first discharge capacity parameter of the battery pack according to the cell internal resistance.

In some examples, the battery management unit is configured to acquire the temperature of the battery pack and find the corresponding current second discharge capacity parameter of the battery pack according to the temperature.

In some examples, the battery management unit is configured to find the current third discharge capacity parameter of the battery pack according to the cell type of the battery pack.

In some examples, the control device is configured to prohibit the operation of the traveling motor and the cutting motor when the discharge capacity parameter outputted by the battery management unit is less than the first parameter threshold.

In some examples, the control device is configured to: when the discharge capacity parameter outputted by the battery management unit is greater than or equal to the first parameter threshold and less than the third parameter threshold, control the operation state of the traveling motor according to the operation instruction inputted by the user and prohibit the operation of the cutting motor.

In some examples, the control device is configured to: when the discharge capacity parameter outputted by the battery management unit is greater than or equal to the third parameter threshold and less than the second parameter threshold, reduce the rotational speed of the cutting motor while controlling the operation states of the traveling motor and the cutting motor based on the operation instruction inputted by the user.

In some examples, the control device is configured to: when the discharge capacity parameter outputted by the battery management unit is greater than or equal to the second parameter threshold, control the operation state of the traveling motor or the cutting motor based on the operation instruction inputted by the user.

A control method for a mower is provided. The mower includes: a battery compartment for mounting at least one battery pack; a cutting assembly including a cutting motor; a traveling assembly including a traveling motor; a battery management unit at least used for monitoring the discharge capacity of the battery pack; and a control device electrically connected to the cutting motor, the traveling motor, and the battery management unit. The control method includes: determining the current discharge capacity parameters of the battery pack in at least two manners and outputting the minimum parameter among the determined current discharge capacity parameters of the battery pack; and when the discharge capacity parameter is greater than or equal to the first parameter threshold and less than the second parameter threshold, adjusting at least the rotational speed of the cutting motor according to a parameter range of the discharge capacity parameter.

The present application has the benefits below. The control device of the mower is electrically connected to the cutting motor, the traveling motor, and the battery management unit, the battery management unit is configured to determine the current discharge capacity parameters of the battery pack in at least two manners and output the minimum parameter among the determined current discharge capacity parameters of the battery pack, and the control device is configured to acquire the current discharge capacity parameter of the battery pack outputted by the battery management unit and according to the outputted current discharge capacity parameter of the battery pack, determine the control information adapted to the cutting motor and the traveling motor so that the discharge capacity of the battery pack can be optimized, and the traveling motor can operate even when the number of battery packs is small, which is conducive to improving the user experience and extending the service life of the battery pack.

### BRIEF DESCRIPTION OF THE DRAWINGS

FIG. 1 is a perspective view of a mower according to an example of the present application.
FIG. 2 is a perspective view of a mower in which a cover plate is not mounted according to an example of the present application.
FIG. 3 is a bottom view of some structures of a mower according to an example of the present application.
FIG. 4 is a control logic flowchart of a mower according to an example of the present application.

### DETAILED DESCRIPTION

Before any example of the present application is explained in detail, it is to be understood that the present application is not limited to the application in the structural details and arrangement of components set forth in the following description or shown in the preceding drawings.

In the present application, the terms "comprising", "including", "having", or any other variation thereof are intended to cover an inclusive inclusion such that a process, method, article, or device including a series of elements includes not only those series of elements, but also other elements not expressly listed, or elements inherent in the process, method, article, or device. Without further limitations, an element defined by the phrase "comprising a..." does not preclude the presence of additional identical elements in the process, method, article, or device including this element.

In the present application, the term "and/or" is used for describing the association relationship between associated objects, which means that there can be three kinds of relationships. For example, A and/or B may indicate that A exists alone, A and B exist simultaneously, and B exists alone. Additionally, the character "/" in the present application generally indicates the "and/or" relationship between associated objects before and after the character "/".

In the present application, the terms "connection", "combination", "coupling", and "mounting" may be direct connection, combination, coupling, or mounting and may also be indirect connection, combination, coupling, or mounting. For example, the direct connection indicates that two parts or assemblies are connected together without an intermediate piece, and the indirect connection indicates that two parts or assemblies are separately connected to at least one intermediate piece and the two parts or assemblies are connected through the intermediate piece. In addition, "connection" and "coupling" are not limited to physical or mechanical connections or couplings and may include electrical connections or couplings.

In the present application, it is to be understood by those of ordinary skill in the art that a relative term (such as "about", "approximately", and "substantially") used in conjunction with a quantity or a condition includes a stated value and has a meaning dictated by the context. For example, the relative term includes at least the degree of error associated with the measurement of a particular value, the tolerance resulting from manufacturing, assembly, and usage and associated with a particular value, and the like. Such a term is to be construed as disclosing a range defined by the absolute values of two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, substantially parallel or substantially perpendicular), "substantially" may refer to that a certain degree (such as 1 degree, 5 degrees, 10 degrees, or more) is added to or subtracted from the indicated angle.

In the present application, it is to be understood by those of ordinary skill in the art that the function implemented by an assembly may be implemented by one assembly, multiple assemblies, one part, or multiple parts. Similarly, a function implemented by a part may be implemented by one part, one assembly, or a combination of parts.

In the present application, the terms such as "up", "down", "left", "right", "front", "rear", and other directional words are described based on the orientations or positional relationships shown in the drawings and should not be understood as limitations to the examples of the present application. In addition, in the context, it is to be understood that when an element is connected "above" or "below" another element, the element can not only be directly connected "above" or "below" the other element but can also be indirectly connected "above" or "below" the other element through an intermediate element. It is also to be understood that orientation words such as an upper side, a lower side, a left side, a right side, a front side, and a rear side not only represent perfect orientations but also may be understood as lateral orientations. For example, the term "below" may refer to "directly below", "on a lower left", "on a lower right", "on a front lower side", "on a rear lower side", and the like.

In the present application, the terms "controller", "processor", "central processing unit", "CPU", and "microcontroller unit (MCU)" are interchangeable. When a unit such as the "controller", the "processor", the "central processing unit", the "CPU", or the "MCU" is configured to implement specific functions, these functions may be implemented by a single unit or multiple units mentioned above unless otherwise indicated.

In the present application, the term "device", "module", or "unit" is used for implementing a specific function in the form of hardware or software.

In the present application, the terms "computing", "judging", "controlling", "determining", "identifying", and the like refer to the operations and processes of a computer system or similar electronic computing device (for example, the controller, the processor, or the like).

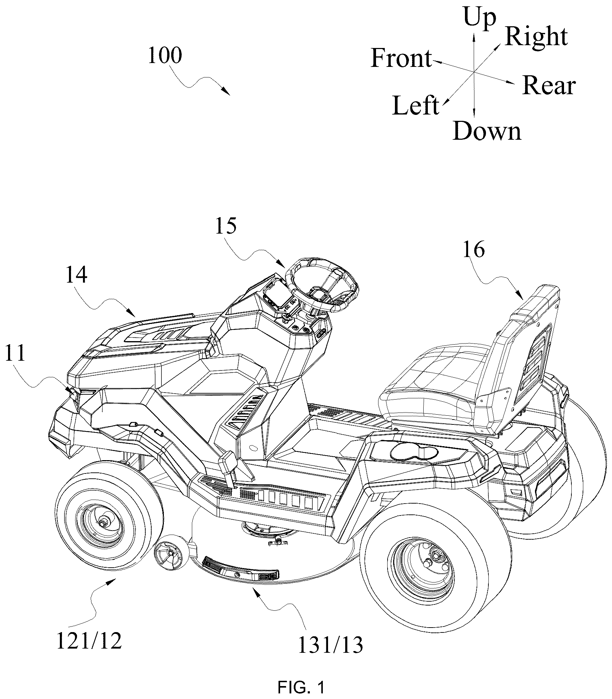

FIG. 1 is a perspective view of a mower according to an example of the present application. Referring to FIG. 1, the mower provided in the present application may be a riding mower. In this example, the case where the mower is specifically a manned mower 100 is used as an example. A user may sit on the riding mower and operate the riding mower to trim lawns or vegetation.

In this example, front, rear, left, right, up, and down are defined as the directions shown in FIG. 1. Specifically, when the user is carried on the manned mower 100 located on the ground, a direction that the user faces is defined as the front, a direction on the back of the user is defined as the rear, a direction on a lefthand side of the user is defined as the left, a direction on a right-hand side of the user is defined as the right, a direction towards the ground is defined as down, and a direction away from the ground is defined as up.

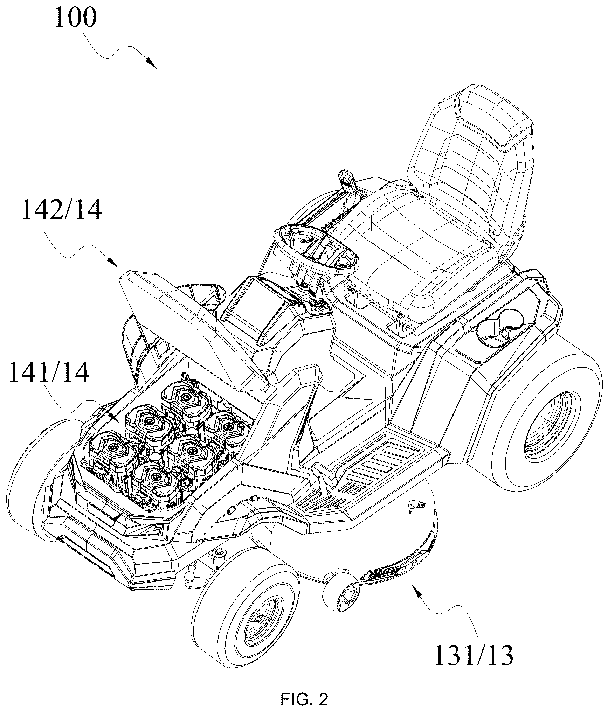

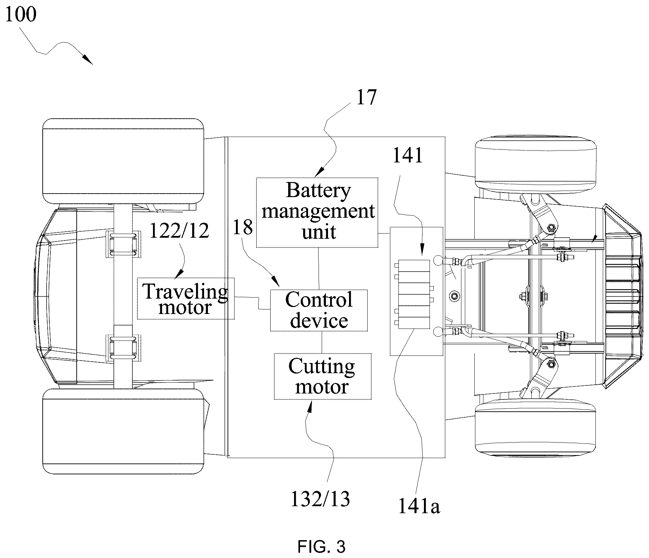

FIG. 2 is a perspective view of a mower in which a cover plate is not mounted according to an example of the present application. FIG. 3 is a bottom view of some structures of a mower according to an example of the present application. In conjunction with FIGS. 1 to 3, the manned mower 100 provided in this example includes a vehicle frame 11, a traveling assembly 12, a cutting assembly 13, a battery compartment 14, a steering operating assembly 15, and a support portion 16. The traveling assembly 12 includes traveling wheels 121 for driving the manned mower 100 to travel on the ground and a traveling motor 122 for driving the traveling wheels 121. The cutting assembly 13 includes a cutting element 131 and a cutting motor 132 for driving the cutting element 131. The battery compartment 14 is used for mounting at least one battery pack 141. In some examples, the battery compartment 14 further includes a cover plate 142 for protecting the battery pack 141. The support portion 16 is configured to support the user. The steering operating assembly 15 is used for controlling the steering of the manned mower 100.

In this example, the support portion 16 may include a seat. In some examples, the support portion may be a platform for the user to stand on.

In this example, referring to FIG. 3, the manned mower 100 further includes a battery management unit 17 and a control device 18. The battery management unit 17 is at least used for monitoring the discharge capacity of the battery pack. The control device 18 is electrically connected to the cutting motor 132, the traveling motor 142, and the battery management unit 17. The battery management unit 17 is configured to determine the current discharge capacity parameters of the battery pack in at least two manners and output the minimum parameter among the determined current discharge capacity parameters of the battery pack. The control device 18 is configured to acquire the current discharge capacity parameter of the battery pack outputted by the battery management unit and according to the outputted current discharge capacity parameter of the battery pack, determine control information adapted to the cutting motor and the traveling motor. That is, multiple discharge capacity parameters are determined in multiple manners, and the battery management unit 17 selects the minimum parameter to participate in subsequent motor control.

The current discharge capacity parameter of the battery pack may be understood as the maximum discharge capacity of the battery pack at the current moment. In some examples, the current discharge capacity parameter of the battery pack is related to at least one of the parameters such as the number of battery packs connected in parallel, the cell voltage of cells 141a of the battery pack 141, the cell type of the cells 141a of the battery pack, and the temperature of the battery pack.

It is to be understood that adopting at least two manners may be understood as determining the current discharge capacity parameters of the battery pack in two manners, respectively or determining the current discharge capacity parameters of the battery pack in more than two manners, respectively. In some examples, the current discharge capacity parameter of the battery pack is related to the cell voltage of the battery pack and the temperature of the battery pack, and the current discharge capacity parameter of the battery pack can be obtained through the cell voltage of the battery pack and the temperature of the battery pack. In some examples, the current discharge capacity parameter of the battery pack is related to the cell type of the battery pack, and the current discharge capacity parameter of the battery pack can be obtained through the cell type of the battery pack. In some examples, the current discharge capacity parameter of the battery pack is related to the temperature of the battery pack, and the current discharge capacity parameter of the battery pack can be obtained through the temperature of the battery pack.

The control information adapted to the cutting motor and the traveling motor may include, but is not limited to, control information of the power of the cutting motor and/or the traveling motor, operation state warning information of the cutting motor and/or the traveling motor, and the like.

It is to be noted that the current discharge capacity parameters of the battery pack determined in different manners may be different. The minimum parameter among the determined current discharge capacity parameters of the battery pack is outputted to the control device so that according to the minimum parameter among the determined current discharge capacity parameters of the battery pack, the control device can determine the control information adapted to the cutting motor and the traveling motor, thereby protecting the battery pack to the greatest extent and extending the service life of the battery pack.

In this example, the control device of the mower is electrically connected to the cutting motor, the traveling motor, and the battery management unit, the battery management unit is configured to determine the current discharge capacity parameters of the battery pack in at least two manners and output the minimum parameter among the determined current discharge capacity parameters of the battery pack, and the control device is configured to acquire the current discharge capacity parameter of the battery pack outputted by the battery management unit and according to the outputted current discharge capacity parameter of the battery pack, determine the control information adapted to the cutting motor and the traveling motor so that the discharge capacity of the battery pack can be optimized, and the traveling motor can operate even when the number of battery packs is small, which is conducive to improving the user experience and extending the service life of the battery pack.

Optionally, the battery management unit 17 is configured to acquire the temperature of the battery pack and the cell voltage of the battery pack and estimate the current first discharge capacity parameter of the battery pack according to the temperature and the cell voltage.

The temperature of the battery pack may be acquired by communicating with a battery management system of the battery pack or by providing a detection device with a temperature sensor in the battery pack, which is not limited here. The cell voltage of the battery pack may be acquired by communicating with a battery management system of the battery pack or by providing a voltage detection device in the battery pack, which is not limited here. It is to be noted that this example does not specifically limit the manners in which the temperature of the battery pack and the cell voltage of the battery pack are acquired, as long as the core inventive concept of the present application can be achieved.

Since the discharge capacity parameter of the battery pack is related to the temperature of the battery pack and the cell voltage of the battery pack, by acquiring the temperature of the battery pack and the cell voltage of the battery pack, the current first discharge capacity parameter of the battery pack can be estimated according to the temperature and cell voltage of the battery pack.

In some examples, the battery management unit 17 is configured to estimate the cell internal resistance of the cells 141a of the battery pack according to the temperature and the cell voltage and determine the current first discharge capacity parameter of the battery pack according to the cell internal resistance.

The cell internal resistance of the battery pack is related to the temperature of the battery pack. For example, within a certain temperature range, the lower the temperature of the battery pack, the greater the cell internal resistance of the battery pack. On the contrary, the higher the temperature of the battery pack, the smaller the cell internal resistance of the battery pack. In addition, the cell internal resistance of the battery pack is related to the cell voltage of the battery pack. Therefore, the cell internal resistance of the battery pack can be estimated according to the temperature of the battery pack and the cell voltage of the battery pack. This example does not specifically limit the method for estimating the cell internal resistance according to the temperature and the cell voltage, as long as the core inventive concept of the present application can be achieved.

The cell internal resistance of the battery pack leads to an increase in energy loss and heat dissipation of the battery pack, affecting the performance of the battery pack. When the cell internal resistance of the battery pack is higher, the discharge capacity parameter of the battery pack is smaller; and when the cell internal resistance of the battery pack is lower, the discharge capacity parameter of the battery pack is larger. Therefore, the current first discharge capacity parameter of the battery pack can be determined according to the cell internal resistance. This example does not specifically limit the method for estimating the current first discharge capacity parameter of the battery pack according to the cell internal resistance, as long as the core inventive concept of the present application can be achieved.

Optionally, the battery management unit 17 is configured to acquire the temperature of the battery pack and find the corresponding current second discharge capacity parameter of the battery pack according to the temperature.

The temperature of the battery pack is related to the discharge capacity parameter of the battery pack. In some examples, the curve between the temperature of the battery pack and the discharge capacity parameter of the battery pack is acquired through calibration so that by acquiring the temperature of the battery pack, the corresponding current second discharge capacity parameter of the battery pack can be found according to the temperature of the battery pack. In some examples, when the number of battery packs connected in parallel is 1 and the temperature of the battery pack is 60°C, the second discharge capacity parameter is 40 A. In some examples, when the number of battery packs connected in parallel is 1 and the temperature of the battery pack is 70°C, the second discharge capacity parameter is 0.

Optionally, the battery management unit 17 is configured to find the current third discharge capacity parameter of the battery pack according to the cell type of the battery pack.

It is to be understood that different cell types of the battery pack correspond to different discharge capacity parameters. Each battery pack has the specified maximum usable current at the time of delivery. Specifically, according to the specified maximum usable current of the battery pack at the time of delivery, the current third discharge capacity parameter of the battery pack is found.

Specifically, the battery management unit determines the current discharge capacity parameters of the battery pack in at least two of the following methods and outputs the minimum parameter among the determined current discharge capacity parameters of the battery pack to the control device so that according to the outputted current discharge capacity parameter of the battery pack, the control device determines the control information adapted to the cutting motor and the traveling motor. The specific method for determining the current discharge capacity parameter of the battery pack is described below. The temperature of the battery pack and the cell voltage of the battery pack are acquired, and the current first discharge capacity parameter of the battery pack is estimated according to the temperature and the cell voltage. By acquiring the temperature of the battery pack, the corresponding current second discharge capacity parameter of the battery pack is found according to the temperature. The current third discharge capacity parameter of the battery pack is found according to the cell type of the battery pack.

Optionally, the control device 18 is configured to prohibit the operation of the traveling motor and the cutting motor when the discharge capacity parameter outputted by the battery management unit is less than the first parameter threshold.

The first parameter threshold may be determined according to the power requirements of the traveling motor and the cutting motor for the battery pack.

When the discharge capacity parameter outputted by the battery management unit is less than the first parameter threshold, the output of the battery pack cannot drive the traveling motor and the cutting motor to operate normally. In this case, the battery pack, the traveling motor, and the cutting motor can be protected by prohibiting the operation of the traveling motor and the cutting motor, thereby extending the service life of the mower.

In some examples, the value range of the first parameter threshold is 20 A to 40 A. In some examples, the first parameter threshold is 20 A. In some examples, the first parameter threshold is 25 A. In some examples, the first parameter threshold is 30 A. In some examples, the first parameter threshold is 40 A.

Optionally, the control device 18 is configured to: when the discharge capacity parameter outputted by the battery management unit is greater than or equal to the first parameter threshold and less than the third parameter threshold, control the operation state of the traveling motor according to the operation instruction inputted by the user and prohibit the operation of the cutting motor.

Similarly, the third parameter threshold may be determined according to the power requirements of the traveling motor and the cutting motor for the battery pack.

When the discharge capacity parameter outputted by the battery management unit is greater than or equal to the first parameter threshold and less than the third parameter threshold, the output of the battery pack can drive the traveling motor to operate according to the operation instruction inputted by the user, thereby improving the user experience. In this case, by prohibiting the operation of the cutting motor, the battery pack and the cutting motor can be protected, thereby extending the service life of the mower.

In some examples, the value range of the third parameter threshold is 40 A to 80 A. In some examples, the third parameter threshold is 40 A. In some examples, the third parameter threshold is 50 A. In some examples, the third parameter threshold is 65 A. In some examples, the third parameter threshold is 80 A.

Optionally, the control device 18 is configured to: when the discharge capacity parameter outputted by the battery management unit is greater than or equal to the third parameter threshold and less than the second parameter threshold, reduce the rotational speed of the cutting motor while controlling the operation states of the traveling motor and the cutting motor based on the operation instruction inputted by the user.

Similarly, the second parameter threshold may be determined according to the power requirements of the traveling motor and the cutting motor for the battery pack.

When the discharge capacity parameter outputted by the battery management unit is greater than or equal to the third parameter threshold and less than the second parameter threshold, the output of the battery pack can drive the traveling motor to move while the speed of the cutting motor is reduced, thereby improving the user experience. Moreover, the battery pack, the traveling motor, and the cutting motor can be protected, thereby extending the service life of the mower.

In some examples, the value range of the second parameter threshold is 80 A to 120 A. In some examples, the second parameter threshold is 80 A. In some examples, the second parameter threshold is 95 A. In some examples, the second parameter threshold is 110 A. In some examples, the second parameter threshold is 120 A.

Optionally, the control device 18 is configured to: when the discharge capacity parameter outputted by the battery management unit is greater than or equal to the second parameter threshold, control the operation state of the traveling motor or the cutting motor based on the operation instruction inputted by the user.

Specifically, when the discharge capacity parameter outputted by the battery management unit is greater than or equal to the second parameter threshold, it indicates that the output of the battery pack is sufficient to drive the traveling motor and the cutting motor to operate. Therefore, the power of the traveling motor or the cutting motor does not need to be limited, and the operation state of the traveling motor or the cutting motor can be controlled based on the operation instruction inputted by the user. In this manner, the user experience can be further improved.

Specifically, the control device acquires the current discharge capacity parameter of the battery pack outputted by the battery management unit and when the outputted discharge capacity parameter of the battery pack is less than the first parameter threshold, prohibits the operation of the traveling motor and the cutting motor. When the outputted discharge capacity parameter of the battery pack is greater than or equal to the first parameter threshold and less than the third parameter threshold, the operation state of the traveling motor is controlled according to the operation instruction inputted by the user and the operation of the cutting motor is prohibited. When the outputted discharge capacity parameter of the battery pack is greater than or equal to the third parameter threshold and less than the second parameter threshold, the rotational speed of the cutting motor is reduced while the operation states of the traveling motor and the cutting motor are controlled based on the operation instruction inputted by the user. When the outputted discharge capacity parameter is greater than or equal to the second parameter threshold, the operation state of the traveling motor or the cutting motor is controlled based on the operation instruction inputted by the user. In this manner, based on the current discharge capacity of the battery pack outputted by the battery management unit, the traveling motor and the cutting motor of the mower can be controlled in stages so that the discharge capacity of the battery pack can be further optimized, which is conducive to improving the user experience and extending the service life of the battery pack.

Based on the same concept, the present application further provides a mower, and the control device of the mower is configured to acquire the current discharge capacity parameter of the battery pack outputted by the battery management unit and when the discharge capacity parameter is greater than or equal to the first parameter threshold and less than the second parameter threshold, adjust at least the rotational speed of the cutting motor according to the parameter range of the discharge capacity parameter.

Adjusting at least the rotational speed of the cutting motor may be understood as only adjusting the rotational speed of the cutting motor, or adjusting the states of other components in addition to adjusting the rotational speed of the cutting motor, for example, at least one of further adjusting the rotational speed of the traveling motor and adjusting the state of the indicator light.

Specifically, when the current discharge capacity parameter of the battery pack is greater than or equal to the first parameter threshold and less than the second parameter threshold, it indicates that the current discharge capacity parameter of the battery pack is smaller, and the output of the battery pack is insufficient to drive the traveling motor and the cutting motor to operate simultaneously. The user does not always need the cutting motor to operate when using the mower. Therefore, when the current discharge capacity parameter of the battery pack is greater than or equal to the first parameter threshold and less than the second parameter threshold, at least the rotational speed of the cutting motor may be adjusted according to the parameter range of the discharge capacity parameter so that it is ensured that the output of the battery pack can drive the traveling motor to operate, thereby improving the user experience.

In this example, the control device is configured to acquire the current discharge capacity parameter of the battery pack outputted by the battery management unit and when the discharge capacity parameter is greater than or equal to the first parameter threshold and less than the second parameter threshold, adjust at least the rotational speed of the cutting motor according to the parameter range of the discharge capacity parameter so that the discharge capacity of the battery pack can be optimized, and the traveling motor can operate even when the number of battery packs is small, which is conducive to improving the user experience and extending the service life of the battery pack.

Optionally, the control device is configured to prohibit the operation of the traveling motor and the cutting motor when the discharge capacity parameter outputted by the battery management unit is less than the first parameter threshold.

Optionally, the control device is configured to: when the discharge capacity parameter outputted by the battery management unit is greater than or equal to the first parameter threshold and less than the third parameter threshold, control the operation state of the traveling motor according to the operation instruction inputted by the user and prohibit the operation of the cutting motor.

Optionally, the control device is configured to: when the discharge capacity parameter outputted by the battery management unit is greater than or equal to the third parameter threshold and less than the second parameter threshold, reduce the rotational speed of the cutting motor while controlling the operation states of the traveling motor and the cutting motor based on the operation instruction inputted by the user.

Optionally, the control device is configured to: when the discharge capacity parameter outputted by the battery management unit is greater than or equal to the second parameter threshold, control the operation state of the traveling motor or the cutting motor based on the operation instruction inputted by the user.

Specifically, the control device acquires the current discharge capacity parameter of the battery pack outputted by the battery management unit and when the outputted discharge capacity parameter of the battery pack is greater than or equal to the first parameter threshold and less than the third parameter threshold, controls the operation state of the traveling motor according to the operation instruction inputted by the user and prohibits the operation of the cutting motor. When the outputted discharge capacity parameter of the battery pack is greater than or equal to the third parameter threshold and less than the second parameter threshold, the rotational speed of the cutting motor is reduced while the operation states of the traveling motor and the cutting motor are controlled based on the operation instruction inputted by the user. In addition, when the outputted discharge capacity parameter of the battery pack is less than the first parameter threshold, the operation of the traveling motor and the cutting motor is prohibited. When the outputted discharge capacity parameter is greater than or equal to the second parameter threshold, the operation state of the traveling motor or the cutting motor is controlled based on the operation instruction inputted by the user. In this manner, based on the current discharge capacity of the battery pack outputted by the battery management unit, the traveling motor and the cutting motor of the mower can be controlled in stages so that the discharge capacity of the battery pack can be further optimized, which is conducive to improving the user experience and extending the service life of the battery pack.

Optionally, the battery management unit is configured to determine the current discharge capacity parameters of the battery pack in at least two manners and output the minimum parameter among the determined current discharge capacity parameters of the battery pack.

Specifically, the battery management unit determines the current discharge capacity parameters of the battery pack in at least two of the following methods and outputs the minimum parameter among the determined current discharge capacity parameters of the battery pack to the control device so that when the discharge capacity parameter is greater than or equal to the first parameter threshold and less than the second parameter threshold, the control device adjusts at least the rotational speed of the cutting motor according to the parameter range of the discharge capacity parameter. The specific method for determining the current discharge capacity parameter of the battery pack is described below. The temperature of the battery pack and the cell voltage of the battery pack are acquired, and the current first discharge capacity parameter of the battery pack is estimated according to the temperature and the cell voltage. By acquiring the temperature of the battery pack, the corresponding current second discharge capacity parameter of the battery pack is found according to the temperature. The current third discharge capacity parameter of the battery pack is found according to the cell type of the battery pack.

In some examples, the battery management unit is configured to estimate the cell internal resistance of the battery pack according to the temperature and the cell voltage and determine the current first discharge capacity parameter of the battery pack according to the cell internal resistance.

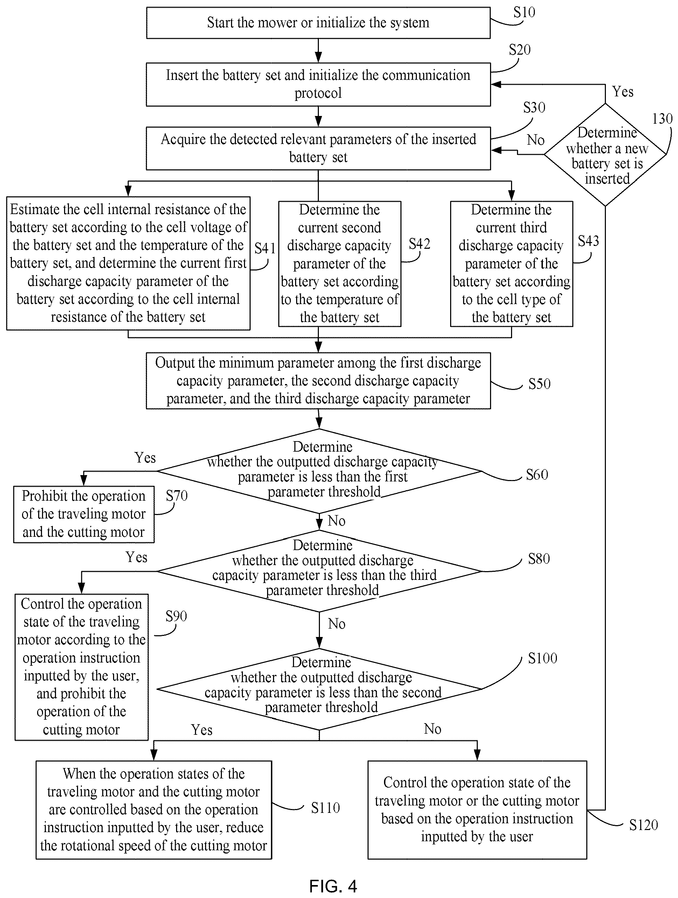

FIG. 4 is a control logic flowchart of a mower according to an example of the present application. Referring to FIG. 4, the control logic of the mower provided by the present application is described below using a specific example.

In S10, the mower is started or the system is initialized.

In S20, the battery pack is inserted and the communication protocol is initialized.

In S30, the detected relevant parameters of the inserted battery pack are acquired.

The relevant parameters may include, but are not limited to, the temperature of the battery pack, the cell voltage of the battery pack, the number of battery packs connected in parallel, the cell type of the battery pack, and the like.

In S41, the cell internal resistance of the battery pack is estimated according to the cell voltage of the battery pack and the temperature of the battery pack, and the current first discharge capacity parameter of the battery pack is determined according to the cell internal resistance of the battery pack.

In S42, the current second discharge capacity parameter of the battery pack is determined according to the temperature of the battery pack.

In S43, the current third discharge capacity parameter of the battery pack is determined according to the cell type of the battery pack.

In S50, the minimum parameter among the first discharge capacity parameter, the second discharge capacity parameter, and the third discharge capacity parameter is outputted.

In S60, whether the outputted discharge capacity parameter is less than 20 A is determined. If so, S70 is performed; if not, S80 is performed.

In S70, the operation of the traveling motor and the cutting motor is prohibited.

In S80, whether the outputted discharge capacity parameter is less than 40 A is determined. If so, S90 is performed; if not, S100 is performed.

In S90, the operation state of the traveling motor is controlled according to the operation instruction inputted by the user, and the operation of the cutting motor is prohibited.

In S100, whether the outputted discharge capacity parameter is less than 80 A is determined. If so, S110 is performed; if not, S120 is performed.

In S110, when the operation states of the traveling motor and the cutting motor are controlled based on the operation instruction inputted by the user, the rotational speed of the cutting motor is reduced.

In S120, the operation state of the traveling motor or the cutting motor is controlled based on the operation instruction inputted by the user.

In S130, whether a new battery pack is inserted is determined. If so, S20 is performed; if not, S30 is performed.

The basic principles, main features, and advantages of the present application are shown and described above. It is to be understood by those skilled in the art that the preceding examples do not limit the present application in any form, and any technical solutions obtained through equivalent substitutions or equivalent transformations are within the scope of the present application.

## Claims

1. A mower, comprising:
a battery compartment (14) for mounting at least one battery pack (141);
a cutting assembly (13) comprising a cutting motor (132);
a traveling assembly (12) comprising a traveling motor (122);
a battery management unit (17) at least used for monitoring a discharge capacity of a battery pack of the at least one battery pack; and
a control device (18) electrically connected to the cutting motor, the traveling motor, and the battery management unit;
wherein the control device acquires a current discharge capacity parameter of the battery pack outputted by the battery management unit and when the discharge capacity parameter is greater than or equal to a first parameter threshold and less than a second parameter threshold, adjusts at least a rotational speed of the cutting motor according to a parameter range of the discharge capacity parameter.

2. The mower of claim 1, wherein the battery management unit determines current discharge capacity parameters of the battery pack in at least two manners and outputs a minimum parameter among the determined current discharge capacity parameters of the battery pack.

3. The mower of claim 1, wherein the battery management unit acquires temperature of the battery pack and a cell voltage of the battery pack and estimates a current first discharge capacity parameter of the battery pack according to the temperature and the cell voltage.

4. The mower of claim 3, wherein the battery management unit estimates cell internal resistance of the battery pack according to the temperature and the cell voltage and determines the current first discharge capacity parameter of the battery pack according to the cell internal resistance.

5. The mower of claim 2, wherein the battery management unit acquires temperature of the battery pack and finds a corresponding current second discharge capacity parameter of the battery pack according to the temperature.

6. The mower of claim 2, wherein the battery management unit finds a current third discharge capacity parameter of the battery pack according to a cell type of the battery pack.

7. The mower of claim 1, wherein the control device prohibits operation of the traveling motor and the cutting motor when the discharge capacity parameter outputted by the battery management unit is less than the first parameter threshold.

8. The mower of claim 1, wherein the control device controls an operation state of the traveling motor according to an operation instruction inputted by a user and prohibits operation of the cutting motor when the discharge capacity parameter outputted by the battery management unit is greater than or equal to the first parameter threshold and less than a third parameter threshold.

9. The mower of claim 1, wherein the control device, when the discharge capacity parameter outputted by the battery management unit is greater than or equal to a third parameter threshold and less than the second parameter threshold, reduces the rotational speed of the cutting motor while controlling operation states of the traveling motor and the cutting motor based on an operation instruction inputted by a user.

10. The mower of claim 1, wherein the control device controls an operation state of the traveling motor or the cutting motor based on an operation instruction inputted by a user when the discharge capacity parameter outputted by the battery management unit is greater than or equal to the second parameter threshold.

11. A control method for a mower comprising a battery compartment (14) for mounting at least one battery pack (141), a cutting assembly (13) comprising a cutting motor (132), a traveling assembly (12) comprising a traveling motor (122), a battery management unit (17) at least used for monitoring a discharge capacity of a battery pack of the at least one battery pack, and a control device (18) electrically connected to the cutting motor, the traveling motor, and the battery management unit, comprising:
determining current discharge capacity parameters of the battery pack in at least two manners and outputting a minimum parameter among the determined current discharge capacity parameters of the battery pack; and
adjusting at least a rotational speed of the cutting motor according to a parameter range of the discharge capacity parameter when a discharge capacity parameter is greater than or equal to a first parameter threshold and less than a second parameter threshold.
